(19) Europäisches Patentamt
European Patent Office
Office européen des brevets

(11) **EP 2 198 661 B1**

(12) **FASCICULE DE BREVET EUROPEEN**

(45) Date de publication et mention
de la délivrance du brevet:
**02.07.2014 Bulletin 2014/27**

(51) Int Cl.:
***H04W 72/08*** *(2009.01)*

(21) Numéro de dépôt: **08837230.5**

(22) Date de dépôt: **12.09.2008**

(86) Numéro de dépôt international:
**PCT/FR2008/051629**

(87) Numéro de publication internationale:
**WO 2009/047418 (16.04.2009 Gazette 2009/16)**

(54) **PROCEDE DE COMMUNICATION DE DONNEES DANS UN RESEAU CELLULAIRE COOPERATIF, DISPOSITIF, ET PRODUIT PROGRAMME D'ORDINATEUR CORRESPONDANTS**

VERFAHREN ZUR DATENKOMMUNIKATION IN EINEM KOOPERATIVEN ZELLNETZWERK SOWIE ENTSPRECHENDES GERÄT UND COMPUTERPROGRAMM DAFÜR

METHOD FOR DATA COMMUNICATION IN A CO-OPERATIVE CELLULAR NETWORK, AND CORRESPONDING DEVICE AND COMPUTER PROGRAM PRODUCT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **14.09.2007 FR 0757614**

(43) Date de publication de la demande:
**23.06.2010 Bulletin 2010/25**

(73) Titulaire: **Orange**
**75015 Paris (FR)**

(72) Inventeurs:
• **SAADANI, Ahmed**
**F-92130 Issy les Moulineaux (FR)**

• **DOHLER, Michael**
**E-08024 Barcelone (ES)**

(56) Documents cités:
**US-A1- 2007 189 260**

• **RALF KATTENBACH: "Statistical Modeling of Small-Scale Fading in Directional Radio Channels" IEEE JOURNAL ON SELECTED AREAS IN COMMUNICATIONS, IEEE SERVICE CENTER, PISCATAWAY, US, vol. 20, no. 3, avril 2002 (2002-04), XP011065458 ISSN: 0733-8716**

**EP 2 198 661 B1**

**Description**

## 1 DOMAINE DE L'INVENTION

La présente invention se rapporte au domaine des systèmes de transmission radio utilisant des entités mobiles. Plus précisément, l'invention se place dans le contexte des réseaux cellulaires coopératifs, permettant une coopération entre des entités présentes dans des cellules du réseau.

Au sein d'un tel réseau, une entité peut être un terminal fixe ou mobile, un noeud de relais ou une station de base. Une entité qui aide une entité source à acheminer un message vers une entité de destination (ou entité destination) est appelée un relais (ou entité relais). Une stratégie de coopération au niveau de telles entités relais consiste par exemple à amplifier un signal reçu d'une entité source ou par une autre entité relais puis à le retransmettre à destination d'une autre entité relais ou d'une entité destination.

Classiquement, au sein de tels systèmes, une sélection d'entités sources autorisées à transmettre de l'information est réalisée. Cette sélection des entités source autorisées à transmettre est assurée par un ordonnanceur. Ainsi, au sein d'une cellule donnée, on sélectionne en priorité la ou les entités source pour lesquelles le canal de transmission respectif avec l'entité destination est parmi les meilleurs, puis on autorise ces entités source à transmettre des informations à l'entité destination. Il peut s'agir par exemple des canaux les moins perturbés. On obtient ainsi un gain en débit dans la cellule. Ce gain est appelé gain de diversité multiutilisateurs et est obtenu par l'application d'une politique d'ordonnancement par l'ordonnanceur.

L'invention se place dans un contexte d'optimisation de la coopération entre les différentes entités d'un système, par exemple lorsqu'un canal de transmission établi entre deux entités du système présente de mauvaises conditions radios.

Un tel système de communication radio avec coopération se présente donc sous la forme d'un ensemble d'entités comprenant au moins une entité source, au moins une entité relais et au moins une entité destination. L'entité source transmet une information vers l'entité destination ou vers l'entité relais, qui retransmet elle-même cette information vers l'entité destination ou vers une autre entité relais. La coopération est assurée en permettant à une entité relais de relayer les informations d'une entité source à une entité destination.

La coopération entre les différentes entités du système permet notamment un gain en diversité du canal de transmission entre l'entité source et l'entité destination, une augmentation de la capacité du système, ou encore une réduction de la consommation de puissance d'émission de la source.

## 2 SOLUTIONS DE L'ART ANTERIEUR

Plusieurs techniques de coopération entre les entités du système sont connues de l'art antérieur. Elles dépendent de plusieurs paramètres. Ces techniques dépendent, notamment, de la technique d'accès utilisée au sein du système. Ainsi :

- en utilisant une technique d'accès TDMA (de l'anglais « Time division multiple access » pour « accès multiple par répartition temporelle »), la coopération entre un émetteur et un relais est faite en deux étapes. La première de ces deux étapes est une phase pendant laquelle le relais (et éventuellement le récepteur) écoute l'émetteur. La deuxième étape est une phase pendant laquelle le relais traite l'information qu'il a écoutée et la retransmet vers le récepteur ;
- en utilisant une technique d'accès FDMA (de l'anglais « Frequency Division Multiple Access » pour « accès multiple par répartition en fréquence »), la coopération est réalisée en utilisant deux bandes de fréquences différentes. L'émetteur émet l'information sur une bande de fréquences qui est reçue par le relais (et éventuellement le récepteur). Le relais traite l'information en utilisant une stratégie de relais et la retransmet en utilisant une autre bande de fréquences. Le récepteur reçoit ainsi l'information avec un décalage temporel sur une autre bande de fréquence ;
- en utilisant une technique OFDMA (de l'anglais «Orthogonal Frequency Division Multiple Access » pour «accès multiple par répartition en fréquence orthogonale »), une même méthodologie que le cas FDMA peut être appliquée avec la différence que le signal original de l'entité source et celui de l'entité relais sont transmis sur deux sous-porteuses différentes ;
- en utilisant une technique CDMA (de l'anglais « Code Division Multiple Access » pour « Accès multiple par répartition en code »), la coopération est réalisée en utilisant deux codes d'étalement C1 et C2. L'émetteur émet l'information en utilisant le code C1. Le relais traite l'information et la retransmet en utilisant le code C2. Le récepteur reçoit ainsi l'information du relais avec un décalage temporel.

La coopération peut être également utilisée lorsque d'autres techniques d'accès sont mises en oeuvre.

Les techniques de coopération utilisent également plusieurs stratégies de relais, en fonction des techniques d'accès susmentionnées mises en oeuvre. Parmi ces stratégies de relais, on peut citer :

- une amplification puis une retransmission : l'entité relais amplifie le signal reçu de l'entité source et le retransmet vers l'entité destination ;
- un décodage puis une retransmission : l'entité relais décode l'information de l'entité source, il l'encode puis la retransmet vers l'entité destination ;
- une quantification et une compression suivie d'une retransmission : l'entité relais comprime le signal reçu de l'entité source puis le retransmet vers l'entité destination ;
- des méthodes hybrides combinant les précédentes méthodes.

Lorsque le canal de transmission établi entre une ou plusieurs entités source et une entité destination présente de mauvaises conditions radios, les entités source peuvent attendre pendant une longue période avant d'être autorisées à transmettre par l'ordonnanceur. Par ailleurs, lorsqu'un ordonnancement opportuniste est utilisé (ordonnancement qui favorise les sources ayant les meilleures conditions radio), les entités sources dont les canaux de transmission établis avec l'entité destination présentent les moins bonnes conditions radios sont rarement autorisées à transmettre.

Certains services dits temps réel imposent une durée d'attente limite de l'entité source avant qu'elle ne soit autorisée à transmettre à ne pas dépasser. Cet aspect a été résolu dans l'art antérieur par le biais d'une probabilité maximale autorisée que la durée moyenne d'attente d'une entité source dépasse un seuil fixé.

Des techniques de coopération de l'art antérieur ont tenté de proposer des critères de sélection des relais permettant à une entité source d'être choisie par un ordonnanceur d'une manière plus fréquente que ce qu'elle l'est sans ces techniques, dans un système radio mobile supportant la coopération entre ses différentes entités (c'est-à-dire les différentes entités présentes dans une des cellules du réseau cellulaire).

Ceci suppose l'existence d'une signalisation permettant le choix des relais attribués à une source donnée pour une destination donnée ainsi que les temps de début et de fin des phases de la coopération quand elle est utilisée. On suppose que les canaux de transmission qui relient l'entité source et l'entité destination, et ainsi que les entités relais sont connus par l'ordonnanceur.

Lorsque les conditions radio sont mauvaises, c'est-à-dire, lorsque le canal de transmission établi entre l'entité source et une entité destination présente une atténuation telle que la transmission de services temps réel ne peut être assurée, une entité source attendra longtemps avant d'être sélectionnée par l'ordonnanceur, dans le cadre d'un ordonnancement opportuniste. Afin de réduire ce délai d'attente, plusieurs techniques de l'art antérieur existent :

- une attribution de priorité à l'entité source et une gestion de priorité au niveau de l'ordonnanceur. On augmente la priorité de l'entité source en fonction de la durée d'attente. Dans cette solution, le canal de transmission établi entre l'entité source et l'entité destination reste inchangé.
- un passage obligatoire par une ou plusieurs entités relais fixes. Une telle méthode consiste à chercher un nouveau chemin constitué d'une ou plusieurs entités relais fixes permettant d'améliorer la qualité radio. Cette méthode a notamment été proposée pour des services non temps-réel et pour une liaison montante, c'est-à-dire une liaison de l'entité source vers une entité de destination fixe telle qu'une station de base.
- une modification de la phase du signal au niveau d'une entité relais. Un signal est émis par l'entité source à destination de deux entités relais distinctes, chacune de ces entités relais multipliant le signal reçu par une phase aléatoire. La combinaison à la réception des signaux en provenance de chacune des entités relais donnera une atténuation globale variable dans le temps.

Malheureusement, ces techniques antérieures présentent un certain nombre d'inconvénients.

Ainsi, si l'on considère la technique d'attribution de priorité à une entité source sans changer le canal de transmission actuel établi avec l'entité destination, on constate que cette technique nécessite un changement au niveau de l'ordonnanceur. De plus, une telle technique ne garantit pas une qualité de canal de transmission suffisante pour pouvoir transmettre. Enfin, cette technique d'attribution de priorité risque de réduire considérablement le gain en diversité multi-utilisateurs lorsqu'un ordonnancement opportuniste est utilisé.

La technique de passage obligatoire par une ou plusieurs entités relais fixes nécessite quant à elle l'existence d'entités relais fixes dans la cellule. Elle ne peut donc pas être mise en oeuvre dans tous les cas de figures.

Enfin, la technique de modification de la phase du signal au niveau d'une entité relais nécessite la présence d'au moins deux entités relais. Elle est donc coûteuse en termes de ressources.

US2007/189260A1 propose une méthode de détection d'une variation temporelle d'un canal entre une entité source et une entité destination à partir d'un flux comprenant une séquence d'apprentissage et une pluralité de séquences de données.

## 3 RESUME DE L'INVENTION

Ainsi, il existe un besoin d'une méthode permettant de réduire le délai d'attente d'une entité source.

A cette fin, l'invention propose un procédé de communication entre moins une entité source et une entité destination, dans un réseau coopératif comprenant une pluralité d'entité, défini par la revendication 1.

Cette technique consiste à exploiter l'information de variation temporelle de réponses impulsionnelle de canaux de transmission établis entre deux entités d'une cellule d'un réseau cellulaire afin de déterminer un canal de transmission global constitué d'un ensemble de ces canaux de transmission.

Le procédé objet de l'invention permet donc, en sélectionnant un canal de transmission global à établir l'entité source, l'entité relais et l'entité destination, d'autoriser l'entité source à transmettre plus fréquemment malgré le fait que le canal de transmission établi directement entre l'entité source et l'entité destination présente une atténuation telle que la transmission de services temps réel ne peut être assurée

En d'autres termes, la combinaison des caractéristiques du canal de transmission établi entre l'entité source et l'entité relias et des caractéristiques du canal de transmission établi entre l'entité relais et l'entité destination permet de déterminer un canal de transmission global présentant une atténuation moindre que celle du canal de transmission établi directement entre l'entité source et l'entité destination. Ceci implique la réduction du délai d'attente de l'entité source avant d'être autorisée à émettre.

Ainsi, l'information de variation temporelle que l'on considère n'est pas une information de variation temporelle partielle concernant un canal de transmission établi par exemple entre une entité source et une entité relais ou entre l'entité relais et une entité destination, mais une information de variation globale concernant un canal de transmission global à établir entre une entité source et une entité destination et transitant via au moins une entité relais. Une telle information de variation globale permet de sélectionner parmi plusieurs canaux de transmission globaux déterminés, celui qui va être le plus adapté, à la différence d'une sélection selon une variation temporelle uniquement partielle qui ne renseigne pas sur l'état de la variation temporelle de la réponse impulsionnelle du canal de transmission global à établir entre l'entité source et l'entité destination et transitant via au moins une entité relais.

Selon une caractéristique particulière de l'invention, la variation temporelle d'une réponse impulsionnelle d'au moins un canal de transmission est déterminée à partir d'une valeur moyenne des réponses impulsionnelle desdits canaux de transmission et d'une vitesse de déplacement de ladite entité donnée.

Une telle solution nécessite une complexité de calculs moindre, l'ordonnanceur ne devant pas déterminer une valeur de la variation temporelle de la réponse impulsionnelle de tous les canaux de transmission établis entre les différentes entités du réseau coopératif.

Selon une caractéristique particulière de l'invention, un canal de transmission global est sélectionné lorsque la variation temporelle de la réponse impulsionnelle dudit canal de transmission global est supérieure à un seuil prédéterminé et lorsqu'une variation temporelle d'une réponse impulsionnelle d'un canal de transmission établi directement entre l'entité source et l'entité relais est inférieure audit seuil prédéterminé.

Ainsi, on détermine à l'avance un seuil de variation temporelle au dessous duquel il est inutile de sélectionner ce canal de transmission global. Ce seuil peut être configuré de manière statique ou être variable dans le temps ou dans l'espace, par exemple en fonction des conditions structurelles d'emplacement des antennes ou de la nature du terrain ou est implanté la cellule du réseau cellulaire.

Selon une caractéristique particulière de l'invention, ladite étape de sélection tient compte d'au moins un critère supplémentaire appartenant au groupe comprenant :

- une atténuation d'un signal dans ledit canal de transmission ;
- une vitesse de déplacement de ladite entité relais ;
- une distance entre ladite entité source et ladite entité relais ;
- une distance entre ladite entité relais et ladite entité destination ;
- une quantité de bande passante disponible ;
- un état de fonctionnement de ladite entité relais ;
- des interférences (entre différents trajets, entre utilisateurs, entre cellules).

Selon une particularité du procédé objet de l'invention, celui-ci comporte u une étape d'information de l'entité relais $M_k$ par laquelle transite le canal global sélectionné pour relayer des échanges de données entre l'entité source $M_i$ et l'entité destination $M_j$.

L'invention concerne également un dispositif de gestion d'une communication entre au moins une entité source et une entité destination, dans un réseau coopératif comprenant une pluralité d'entité, défini par la revendication 6.

Selon une particularité du dispositif de gestion de transmission de données objet de l'invention celui-ci comprend également des moyens d'information de l'entité relais par laquelle transite le canal global sélectionné pour relayer des échanges de données entre l'entité source et l'entité destination.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de communication tel que décrit précédemment.

## 4 LISTE DES FIGURES

D'autres caractéristiques et avantages de l'invention apparaîtront plus clairement à la lecture de la description suivante d'un mode de réalisation de l'invention, donné à titre de simple exemple illustratif et non limitatif, et des dessins annexés, parmi lesquels :

- la figure 1 est un diagramme illustrant un réseau cellulaire, cellule comprenant K entités pouvant coopérer entre elles ;
- la figure 2 illustre les différentes étapes de mise en oeuvre du procédé de communication selon l'invention ;
- la figure 3 représente des variations temporelles des atténuations des canaux de transmission établis entre trois entités mobiles M1, M2, M3 et une station de base SB ainsi que des variations temporelles des atténuations du canal de transmission global établi entre l'entité M1 et la station de base SB et relayé par une entité M4 ;
- la figure 4 décrit un exemple de sélection des entités mobiles M1, M2 et M3 pour le mode d'accès TDMA sans mise en oeuvre du procédé de communication selon l'invention ;
- la figure 5 décrit un exemple de sélection des entités mobiles M1, M2 et M3 pour le mode d'accès TDMA lors d'une mise en oeuvre du procédé de communication selon l'invention ;
- la figure 6 illustre les probabilités que le délai d'attente des entités mobiles M1, M2 et M3 dépasse un délai maximum, avec et sans mise en oeuvre du procédé de communication selon l'invention ;
- la figure 7 illustre un dispositif de transmission selon un mode de réalisation particulier de l'invention.

## 5 DESCRIPTION DETAILLEE DE L'INVENTION

### 5.1 1 Rappel du principe de l'invention

L'invention propose une nouvelle technique de sélection de canaux de transmission globaux établis entre une entité source et une entité destination et transitant par une ou plusieurs entités relais, permettant de relayer des données de l'entité source vers l'entité destination, ce qui permet de réduire le délai d'attente d'une entité source pour qu'elle soit autorisée à transmettre.

Une telle réduction de délai peut par exemple se révéler utile lorsque le canal de transmission établi entre une entité source et une entité destination est perturbé, entraînant une faible fréquence de sélection de l'entité source, notamment lorsqu'un ordonnancement opportuniste est mis en oeuvre.

Le principe général de l'invention repose sur la sélection d'un canal de transmission global établi entre une entité source et une entité destination et transitant par au moins une entité relais pour retransmettre à l'entité destination, des informations reçues de l'entité source. Ainsi, par voie de conséquence :

- le délai d'attente de transmission de la (ou des) entité source, c'est à dire le délai pour que l'entité source soit sélectionnée et autorisée par l'ordonnanceur à transmettre des informations, est réduit ;
- certaines contraintes du système, comme par exemple le débit de transmission, la probabilité de coupure, ..., sont respectées.

La réduction de ce délai de sélection de l'entité source est obtenue par la mise en oeuvre du procédé de communication de données entre une entité source et une entité destination, via au moins une entité relais, selon l'invention. L'entité relais est une entité mobile, c'est-à-dire en déplacement dans la cellule, qui peut par exemple utiliser une stratégie de relais reposant sur l'amplification et la retransmission telle que décrite précédemment.

L'invention propose donc d'exploiter les propriétés de variation temporelle de la réponse impulsionnelle des canaux de transmission établis entre deux entités de la cellule pour sélectionner un canal de transmission global reliant l'entité source à l'entité destination et transitant par au moins une entité relais mobile, et réduire ainsi le délai de sélection de l'entité source.

On considère par exemple un réseau coopératif dans lequel il est supposé que des caractéristiques d'un canal de transmission établi entre l'entité source et l'entité destination évoluent peu dans le temps et que ces caractéristiques présentent des valeurs telles que la qualité de réception des données n'est pas satisfaisante. De telles caractéristiques sont par exemple l'atténuation.

Ceci a pour conséquence que le délai d'attente pour qu'une entité source soit autorisée à émettre est long.

On suppose également qu'il existe une entité jouant le rôle de relais qui se déplace dans la cellule impliquant une variation rapide du canal de transmission la reliant à l'entité source, et du canal de transmission la reliant à l'entité destination.

On appelle canal de transmission global ce nouveau canal de transmission correspondant au canal de transmission destiné à être établi entre l'entité source, et l'entité destination par l'intermédiaire d'une ou plusieurs entités relais..

Ainsi toute information émise par l'entité source est transmise à l'entité destination à travers le canal de transmission global. Le procédé de communication selon l'invention permet donc d'établir un canal de transmission global entre l'entité source et l'entité destination pour suppléer le canal de transmission établi directement entre la source et la destination, la réponse impulsionnelle du canal de transmission global variant plus rapidement dans le temps que la réponse impulsionnelle du canal de transmission direct.

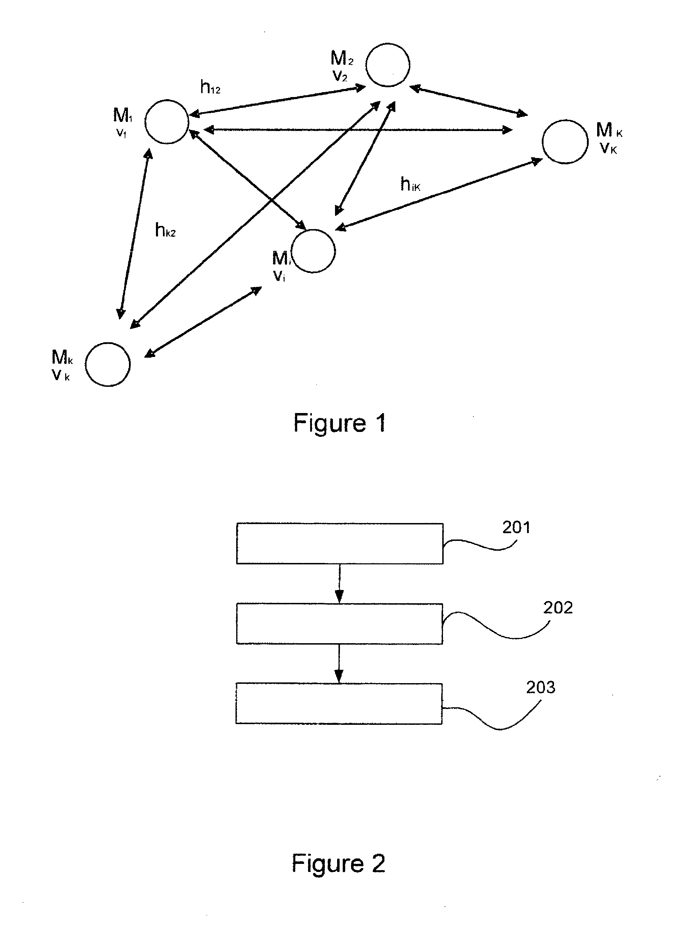

On décrit, en relation avec la figure 1, un réseau au sein duquel peut être appliqué le procédé de communication selon l'invention. Ce réseau comprend K entités qui peuvent coopérer entre elles. Ces entités sont appelées $M_1$, $M_2$,..., $M_K$, chacune d'elles se déplaçant à une vitesse $v_k$, pour k=1...K, où $v_k$ peut être égale à 0. Chaque canal de transmission reliant une entité i (i=1...K) à une entité j (j=1...K et i≠j) est noté $h_{ij}$.

On suppose que les variations temporelle sde la réponse impulsionnelle des canaux de transmission reliant ces différentes entités entre elles sont connues d'un ordonnanceur, qui réalise par exemple une estimation de cette variation pour tous ces canaux de transmission, par exemple en utilisant la méthode des symboles pilotes, connue de l'homme de l'art. Cet ordonnanceur est intégré dans une entité du réseau telle que par exemple une station de base.

Lorsqu'une entité source (par exemple $M_i$) désire transmettre des informations à une entité destination (par exemple $M_j$), elle doit y être autorisée par l'ordonnanceur. Si le canal de transmission la reliant directement à l'entité destination ne présente pas une variation temporelle de la réponse impulsionnelle du canal suffisante, et que la vitesse de déplacement de l'entité source est lente, cette entité source peut rester silencieuse pendant une longue période avant d'être autorisée à transmettre.

Connaissant les propriétés de variation temporelle de la réponse impulsionnelle des autres canaux de transmission (par exemple les canaux de transmission $h_{ik}$ et $h_{kj}$), l'ordonnanceur propose à l'entité source $M_i$ qui veut transmettre, un canal de transmission global passant par un ou plusieurs relais (par exemple $M_k$) de telle façon que ce nouveau canal de transmission global (c'est à dire le canal de transmission global établi entre la source et la destination, et transitant par le ou les relais) dispose d'une variabilité temporelle de la réponse impulsionnelle de ce canal suffisante pour assurer le service désiré. En d'autres termes, le canal de transmission global destiné à être établi entre l'entité source et l'entité destination par l'intermédiaire des entités relais présente une réponse impulsionnelle variant plus rapidement que celle du canal de transmission établi directement entre l'entité source $M_i$ et l'entité destination $M_j$.

La variation de la réponse impulsionnelle des canaux de transmission est par exemple évaluée au moyen d'une fonction de corrélation temporelle du canal $R(\tau)$, qui caractérise la vitesse de variation d'un canal établi entre les entités i et j. Cette fonction $R(\tau)$ est définie comme la moyenne statistique du produit de la réponse impulsionnelle $h_{ij}$ du canal à l'instant t et de son conjugué, noté $h^*_{ij}$, à l'instant $t+\tau$ :

$$R(\tau)=E(h_{ij}(t)\ h^*_{ij}(t+\tau))$$

Ainsi, plus cette fonction de corrélation est décroissante plus la variabilité temporelle de la réponse impulsionnelle du canal, c'est-à-dire les variations de l'atténuation d'un signal transmis au travers du canal dans le temps, est importante.

Le procédé de communication selon l'invention, par exemple mis en oeuvre au sein d'un ordonnanceur, peut se baser sur une telle métrique de type fonction de corrélation temporelle pour identifier un ou plusieurs canaux de transmission globaux, destiné à être établis entre une entité source et une entité destination et transitant par une ou plusieurs entités relais, susceptibles de transmettre l'information entre l'entité source donnée et l'entité destination donnée.

Dans un mode de réalisation du procédé, la propriété de l'autocorrélation de l'atténuation du canal de transmission peut être considérée comme métrique de choix d'un canal de transmission global, il propose alors à l'entité source $M_i$ d'établir un canal de transmission global transitant par une entité relais $M_k$ (k=1...K et k≠i≠j) pour atteindre $M_j$ tel que la fonction d'autocorrélation :

$$R'(\tau)=E(h_{ik}(t)\ h_{kj}(t)\ h^*_{ik}(t+\tau)\ h^*_{kj}(t+\tau))$$

soit suffisamment décroissante pour assurer le service désiré. Cette décroissance reflète la vitesse de variabilité temporelle de la réponse impulsionnelle du canal de transmission global et donc la durée d'attente d'une entité source avant de pouvoir être autorisée à émettre lorsque le canal de transmission direct établi entre cette entité source et une entité destination se trouve dans de mauvaises conditions radio.

Cette décroissance est fortement reliée à la vitesse $v_k$ de déplacement de l'entité relais $M_k$. Ainsi, dans un

autre mode de réalisation du procédé de communication objet de l'invention, la variation de la réponse impulsionnelle des canaux de transmission est évaluée à partir d'une valeur moyenne de la réponse impulsionnelle d'un canal de transmission et d'une valeur de la vitesse de déplacement de l'une des entités entre lesquelles le canal de transmission est établi. Ainsi, plus la vitesse de déplacement de l'une des entités entre lesquelles le canal de transmission est établi est grande, plus la variation temporelle de la réponse impulsionnelle est forte.

Le calcul de la fonction R'($\tau$) est notamment décrit par C.S. Patel et al. dans le document « Statistic properties of amplify and forward relay fading channels » (IEEE Transactions on Vehicular technology, Vol 55, No. 1, Janvier 2006), dans le cas d'une seule entité relais, pour un canal de transmission de type Rayleigh entre l'entité source et l'entité relais et entre l'entité relais et l'entité destination. Ceci est une hypothèse faite sur la nature du canal de transmission dans un mode de réalisation particulier de l'invention.

Il est bien entendu que d'autres métriques, par exemple des métriques d'ordre 2, pourraient être utilisées. Un exemple d'illustration d'une telle métrique est le suivant :

$$R''(\tau)=E(|h_{ik}(t)|^2 \; |h_{kj}(t)|^2 \; |h_{ik}(t+\tau)|^2 \; |h_{kj}(t+\tau)|^2)$$

Ainsi la variabilité temporelle de la réponse impulsionnelle du canal de transmission global établi entre l'entité source et l'entité destination est suffisamment importante pour assurer la communication entre l'entité source et l'entité destination. On utilise donc les vitesses de déplacement relatives de la ou des entités relais entre elles et vis-à-vis de l'entité source et/ou de l'entité destination pour déterminer la variabilité temporelle de la réponse impulsionnelle des canaux de transmission établis entre l'entité source et la ou les entités relais et entre cette entité relais et l'entité destination et sélectionner le canal de transmission global transitant établi entre l'entité source et l'entité destination doit transiter.

Ainsi le procédé de communication selon l'invention comprend les étapes suivantes, illustré en relation avec la figure 2 :

- une étape de détermination 201 d'une information de variation temporelle de la réponse impulsionnelle de canaux de transmission globaux destinés à être établis entre une entité source et une entité destination et transitant par au moins une entité relais, à l'aide d'informations de variation temporelle de la réponse impulsionnelle de canaux de transmission établis entre les différentes entités en déplacement dans la cellule du réseau cellulaire, par exemple les entités $M_1$, $M_2$, ..., $M_k$ ;
- une étape de sélection 202, parmi l'ensemble des canaux de transmission globaux possibles, d'un canal de transmission global en fonction des informations de variation temporelle de la réponse impulsionnelle de l'ensemble des canaux de transmission globaux destinés à être établis entre l'entité source et l'entité destination;
- une étape 203 d'information de l'entité relais $M_k$ par laquelle transite le canal global sélectionné pour relayer des échanges de données entre l'entité source $M_i$ et l'entité destination $M_j$.

Une telle sélection d'un canal de transmission global en fonction de la variabilité temporelle de la réponse impulsionnelle du canal de transmission global permet de réduire le délai d'attente d'une entité source avant que celle-ci ne soit autorisée à émettre par l'ordonnanceur.

De plus, un tel canal de transmission global peut transiter par une entité relias appartenant à une cellule voisine et se trouvant à portée de l'ordonnanceur. Ainsi, le rôle d'entité relais n'est pas limité aux seuls terminaux mobiles de la cellule.

5.2 Description d'un mode de réalisation

On présente dans ce mode de réalisation, de nouveau en relation avec la figure 1, la mise en oeuvre du procédé de communication selon l'invention au sein d'un réseau cellulaire comprenant, dans une même cellule, une station de base correspondant à l'entité destination $M_j$, et K-1 terminaux mobiles $M_k$, pour k=1...K et k≠j, qui peuvent coopérer entre eux. On considère également que :

- la technique d'accès utilisée au sein du système est la technique TDMA décrite plus haut ;
- que le terminal mobile $M_l$ (entité source) cherche à transmettre des données à la station de base $M_j$, la liaison établie entre ces deux entités est une liaison montante : du terminal mobile vers la station de base ;

La station de base est considérée comme étant située sur un point en hauteur par rapport à l'entité source et fixe dans la cellule (c'est-à-dire non mobile). Par conséquent, elle n'a pas d'impact sur la variabilité temporelle de la réponse impulsionnelle du canal radio établi avec l'entité source.

On suppose que le terminal mobile $M_l$ est placé dans un environnement cloisonné, c'est-à-dire qu'il se situe au sein d'un bâtiment par exemple, et voit ainsi la réponse impulsionnelle du canal de transmission le reliant à la station de base varier très lentement car l'atténuation entre la station de base $M_j$ et le terminal mobile $M_l$ est importante, par exemple à cause de la distance, des murs.... Ainsi l'atténuation du canal de transmission établi entre les terminaux $M_l$ et $M_j$ se situe en dessous d'un certain seuil prédéterminé qui leur permettrait de communiquer entre eux. Ce seuil est notamment fonction de l'application demandée.

Par ailleurs, la variation très lente dans le temps de la réponse impulsionnelle du canal de transmission établi entre les terminaux $M_l$ et $M_j$ peut garder le terminal mobile $M_l$ dans de mauvaises conditions radio pour communiquer avec la station de base $M_j$ pendant une durée importante, ce qui peut être inacceptable pour le terminal mobile $M_l$ selon l'application demandée.

La mise en oeuvre du procédé objet de l'invention selon ce mode de réalisation conduit la station de base $M_j$ à demander aux terminaux mobiles présents dans sa cellule et aptes à coopérer avec le terminal mobile $M_l$ de lui remonter des informations concernant la variabilité temporelle de la réponse impulsionnelle des canaux de transmission établis entre chaque terminal mobile et la station de base, entre chaque terminal mobile et l'entité source $M_l$ et entre les différents terminaux mobiles entre eux. Il est à noter que ces terminaux mobiles ne sont pas nécessairement actifs, c'est-à-dire qu'ils peuvent être uniquement en mode veille.

La station de base $M_j$ sélectionne alors au moins un canal de transmission global la reliant à l'entité source et transitant par un terminal mobile $M_k$ servant d'entité relais. Une fois le canal de transmission global sélectionné, la station de base demande à l'entité relais de relayer les données transmises par le terminal mobile $M_l$. Le canal de transmission global établi entre l'entité source $M_l$ et la station de base et transitant par l'entité relais $M_k$ est un canal de transmission qui présente une forte variation de ses propriétés temporelles.

Si ce canal de transmission global ne satisfait pas certaines conditions, différentes de la variabilité temporelle de la réponse impulsionnelle, comme par exemple si ce canal de transmission global est plus sensible aux interférences, la station de base évalue un autre candidat pour relayer $M_l$. Cette procédure peut être répétée jusqu'à ce que la station de base trouve une entité relais convenable. D'autres conditions différentes de la variabilité temporelle de la réponse impulsionnelle du canal sont par exemple : une atténuation d'un signal dans ledit canal de transmission, une vitesse de déplacement de ladite entité relais, une distance entre ladite entité source et ladite entité relais, une distance entre ladite entité relais et ladite entité destination, une quantité de bande passante disponible, un état de fonctionnement de ladite entité relais, des interférences (entre différents trajets, entre utilisateurs, entre cellules).

On considère selon cet exemple que la station de base joue également le rôle d'ordonnanceur.

Ainsi, la station de base met à jour régulièrement les valeurs des réponses impulsionnelles $h_{ij}$ instantanées ou moyennes des canaux de transmission établis entre les différents terminaux mobiles de la cellule, mais également leur sensibilité aux interférences, par exemple, afin de sélectionner en permanence, parmi les canaux de transmission globaux possibles, au moins un qui soit apte à relayer la transmission d'information entre l'entité source $M_l$ et l'entité destination $M_j$.

Le procédé selon l'invention permet donc une exploitation dynamique de la variabilité temporelle de réponse impulsionnelle des canaux de transmission établis entre les différents terminaux mobiles de la cellule pour permettre aux terminaux mobiles dont le canal de transmission les reliant à la station de base présente une faible variabilité temporelle de réponse impulsionnelle ou une atténuation importante de profiter de la variabilité supérieure des propriétés temporelles de canaux de transmission les reliant à d'autres terminaux mobiles qui se situent à leurs portées.

5.3 Exemple de mise en oeuvre

Dans cet exemple, on considère une station de base et quatre terminaux mobiles (K=5), pour une transmission de données sur une liaison montante (terminal mobile vers station de base). On suppose également que :

- trois des terminaux mobiles se déplacent à une même vitesse égale à $v_0$ ;
- le quatrième terminal mobile se déplace à une vitesse $10v_0$ ;
- la station de base est immobile ;
- les canaux de transmission établis entre les différents terminaux sont de type Rayleigh et le modèle de variation de la variation temporelle de la réponse impulsionnelle des canaux de transmission est celui de Jakes (tel que décrit dans la publication « W. C. Jakes, Microwave Mobile Communications. New York : IEEE Press, 1974 ») ;
- à un instant donné, la station de base permette seulement au terminal mobile qui présente la meilleure qualité de canal de transmission de transmettre, on considère donc le cas d'un ordonnancement opportuniste ;
- une entité relais désignée retransmet le signal qu'elle a reçu après l'avoir amplifié, selon la stratégie amplification/retransmission définie précédemment.

On utilise également un critère pour caractériser la contrainte de service temps réel. Plus précisément, on définit ce critère par la probabilité que la durée moyenne d'attente $D$ d'une entité source cherchant à émettre dépasse un délai maximum $D_{max}$ soit inférieure à une seuil fixé $\varepsilon$. Ceci est équivalent à :

$$Pr(D > D_{max}) < \varepsilon$$

Ce critère permet de mesurer la durée moyenne d'attente d'une entité source (par exemple un terminal mobile) avant que celle-ci ne soit autorisée à émettre.

On évalue ce critère dans le cadre de deux scénarii possibles :

- Scénario 1 : les trois terminaux mobiles notés $M_1$, $M_2$, $M_3$ sont reliés directement à la station de base, sans mise en oeuvre du procédé selon l'invention ;
- Scénario 2: la station de base, connaissant la valeur moyenne de la réponse impulsionnelle des canaux de transmission établis entre le terminal mobile $M_1$ et le terminal mobile $M_4$ d'une part et le terminal mobile $M_4$ et la station de base d'autre part, demande au terminal mobile $M_4$ de lui remonter une information sur la valeur de sa vitesse de déplacement. Elle décide de lui ordonner de relayer le terminal mobile $M_1$.

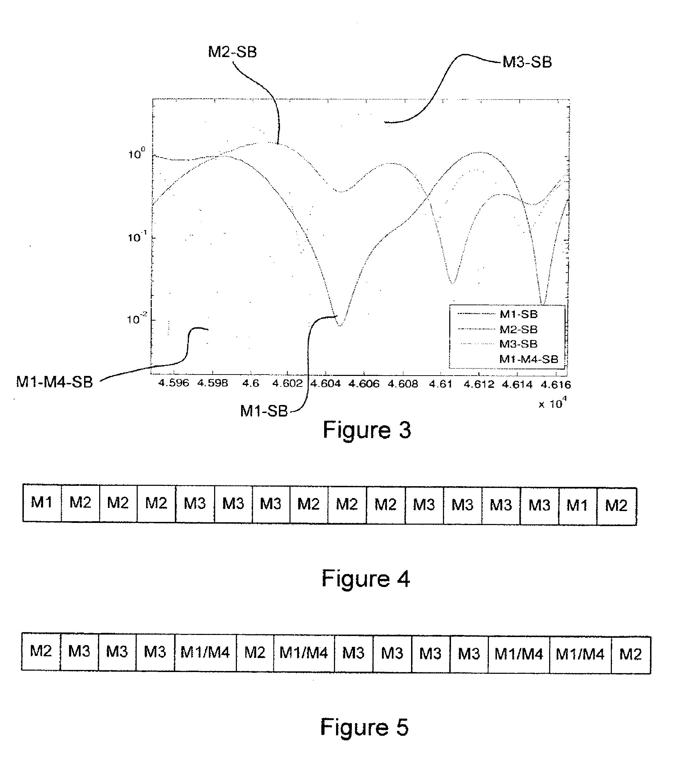

On présente en premier lieu sur la figure 3 les variations temporelles de la réponse impulsionnelle des canaux de transmission établis entre le terminal mobile $M_1$ et la station de base (canal de transmission M1-SB), entre le terminal mobile $M_2$ et la station de base (canal de transmission M2-SB), entre le terminal mobile $M_3$ et la station de base (canal de transmission M3-SB), et du canal de transmission global établi entre le terminal mobile $M_1$, le terminal mobile $M_4$, et la station de base (canal de transmission global M1-M4-SB), et les gains conférés par l'invention pour ces deux scénarii.

Plus précisément, la figure 3 présente en abscisse le temps et en ordonnée l'atténuation d'un canal de transmission en fonction du temps.

La figure 4 illustre l'allocation par un ordonnanceur, sur une fenêtre temporelle, d'intervalles temporels aux entités source $M_1$, $M_2$, $M_3$ au cours desquels elles sont autorisées à émettre des données, selon le scénario 1 (art antérieur). La figure 5 illustre l'allocation par un ordonnanceur, sur une fenêtre temporelle, d'intervalles temporels aux entités source $M_1$, $M_2$, $M_3$, $M_4$, au cours desquels les entités sources M1, M2, M3 sont autorisées à émettre, selon le scénario 2 (invention).

On remarque que sans coopération entre les différents terminaux mobiles d'une même cellule, le terminal mobile $M_1$ est sélectionné uniquement au début et à la fin de la fenêtre temporelle (figure 4). Cette faible fréquence de sélection résulte de la faible variation temporelle de la réponse impulsionnelle du canal de transmission le reliant directement à la station de base. En revanche, lorsqu'on utilise une technique de coopération selon l'invention, c'est-à-dire lorsque le terminal mobile $M_4$ relaie les transmissions du terminal mobile $M_1$ via le canal de transmission global M1-M4-SB, ce dernier est plus fréquemment sélectionné ce qui réduit son délai d'attente.

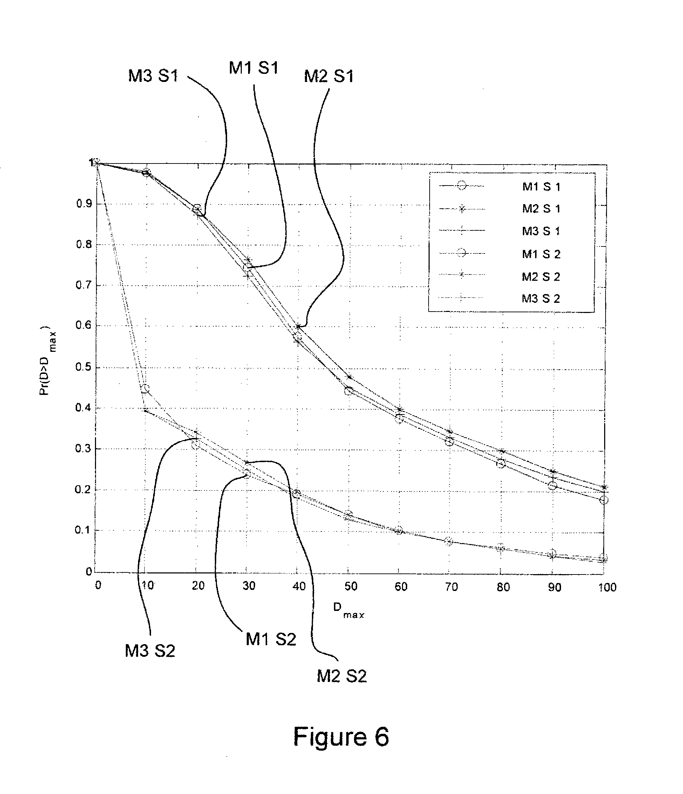

On présente finalement, sur la figure 6, la probabilité que la durée d'attente d'un terminal mobile dépasse un délai maximum $D_{max}$, selon le scénario 1 (S1) ou le scénario 2 (S2).

Si par exemple un service temps réel exige que cette probabilité ne dépasse pas les 10% pour un délai de 60 unités de temps, ce service ne sera pas assuré dans le premier scénario pour les trois terminaux mobiles M1, M2, M3. En effet dans ce cas de figure, cette probabilité vaut 40%. Toutefois en utilisant un relais suffisamment rapide, comme dans le cadre du scénario 2, cette probabilité est réduite à 10%.

En d'autres termes, sans sélection d'un terminal mobile relais comme dans le cas du premier scénario, la probabilité que la contrainte imposée par le service temps réel pour un délai de 60 unités temporelles ne soit pas respectée est de 40%.

En utilisant un terminal mobile relais comme dans le cas du scénario 2, cette probabilité n'est plus que de 10%. Les contraintes imposées sont donc plus souvent respectées grâce à l'invention.

L'invention peut également être mise en oeuvre dans d'autres types de réseau comme par exemple des réseaux de type « Broadcast » (terme anglais pour « Diffusion Multiple »). On dit d'un canal de transmission que c'est un canal de transmission « Broadcast » quand une entité source transmet vers plusieurs entités destination un ensemble d'informations qui peut être commun à toutes les destinations. Un exemple de ce type de réseau est la télédiffusion. Dans un tel réseau, l'invention est, par exemple, mise en oeuvre pour qu'une station de base puisse diffuser des informations à un ensemble de terminaux mobiles, certains des terminaux de l'ensemble étant utilisés pour relayer l'information vers d'autres terminaux qui ne sont pas accessibles directement par la station de base.

L'invention peut également être mise en oeuvre dans le cas d'un réseau utilisant une technique d'accès dite « Multiple Access » qui est, comme cela a déjà été décrit plus haut, un réseau dans lequel plusieurs entités source transmettent vers une même destination des paquets d'information. Un exemple type est une liaison montante pour un système cellulaire où tous les terminaux mobiles transmettent des informations vers la station de base.

L'invention peut encore être mise en oeuvre dans le cadre d'un « Réseau Ad hoc », qui est un réseau qui est apte à s'organiser de lui-même sans qu'une infrastructure ait été définie au préalable. Dans ce type de réseau, chaque entité peut jouer différents rôles: source, destination, relais... Un exemple d'un tel réseau Ad hoc est un réseau sans fil de type « Wifi » permettant une mise en place rapide d'une connexion réseau entre deux ordinateurs. L'invention trouve donc une application dans ce type de réseau en permettant à des terminaux de relayer l'information en provenance de terminaux sources vers des terminaux destination.

5.4 <u>Architecture d'un dispositif de transmission selon l'invention</u>

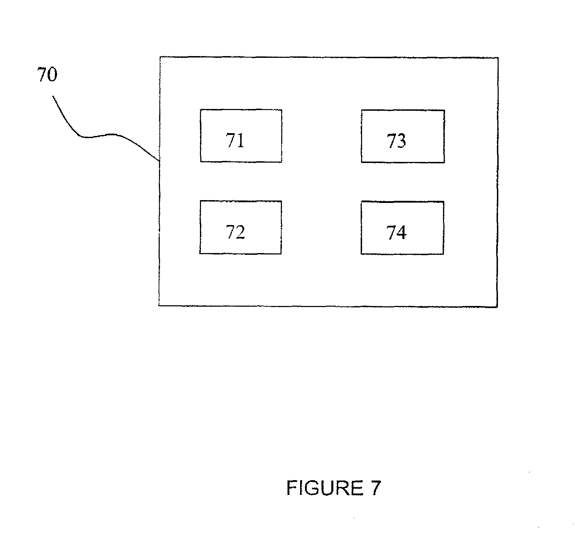

On présente, en relation avec la figure 7, une architecture simplifiée d'un dispositif de mise en oeuvre du procédé de communication selon l'invention.

Un tel dispositif de communication 70 comprend des moyens de détermination 71 d'une variation temporelle d'une réponse impulsionnelle d'un canal de transmission établi entre une première entité et une deuxième entité d'une cellule. Le dispositif 70 comprend également des moyens de détermination 72 d'une variation temporelle d'une réponse impulsionnelle d'au moins un canal de transmission global établi entre l'entité source et l'entité destination et transitant par au moins une entité relais, à partir des variations temporelles des réponses impulsionnelle desdits canaux de transmission;

Le dispositif 70 comprend encore des- des moyens de sélection 73 d'un canal de transmission global en fonction des variations temporelles des réponses impulsionnelle des canaux de transmission globaux, ainsi que des moyens d'information 74 de l'entité relais $M_k$ par laquelle transite le canal global sélectionné pour relayer des échanges de données entre l'entité source $M_i$ et l'entité destination $M_j$.

Enfin, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

**Revendications**

**1.** Procédé de communication entre au moins une entité source et une entité destination, dans un réseau coopératif comprenant une pluralité d'entités, le procédé comprenant une étape de détermination, pour une entité donnée dudit réseau, d'une variation temporelle d'une réponse impulsionnelle d'un canal de transmission établi entre ladite entité donnée et une autre entité,
caractérisé en ce ledit procédé comprend :

- une étape de détermination (201) d'une variation temporelle d'une réponse impulsionnelle d'au moins un canal de transmission global destiné à être établi entre l'entité source et l'entité destination et transitant par au moins une entité relais, à partir des variations temporelles des réponses impulsionnelle des canaux de transmission établis respectivement entre l'entité source et l'entité relais, et l'entité relais et l'entité destination constituant le canal de transmission global,
- une étape de sélection (202) d'un canal de transmission global parmi l'ensemble des canaux de transmission globaux déterminés par comparaison de la variation temporelle de la réponse impulsionnelle des canaux de transmission globaux avec une variation temporelle d'une réponse impulsionnelle d'un canal de transmission établi directement entre l'entité source et l'entité destination.

**2.** Procédé de communication selon la revendication 1, **caractérisé en ce que** la variation temporelle d'une réponse impulsionnelle d'au moins un canal de transmission est déterminée à partir d'une valeur moyenne des réponses impulsionnelle desdits canaux de transmission et d'une vitesse de déplacement de ladite entité donnée.

**3.** Procédé de communication selon l'une des revendications précédentes, **caractérisé en ce qu'**un canal de transmission global est sélectionné lorsque la variation temporelle de la réponse impulsionnelle dudit canal de transmission global est supérieure à un seuil prédéterminé et lorsqu'une variation temporelle d'une réponse impulsionnelle d'un canal de transmission établi directement entre l'entité source et l'entité relais est inférieure audit seuil prédéterminé.

4. Procédé de communication selon l'une quelconque des revendications 1 à 3, **caractérisé en ce que** ladite étape de sélection tient compte d'au moins un critère supplémentaire appartenant au groupe comprenant :

   - une atténuation d'un signal dans ledit canal de transmission ;
   - une vitesse de déplacement de ladite entité relais ;
   - une distance entre ladite entité source et ladite entité relais ;
   - une distance entre ladite entité relais et ladite entité destination ;
   - une quantité de bande passante disponible ;
   - un état de fonctionnement de ladite entité relais ;
   - des interférences (entre différents trajets, entre utilisateurs, entre cellules).

5. Procédé de communication selon l'une quelconque des revendications 1 à 4, **caractérisé en ce qu'**il comporte une étape (203) d'information de l'entité relais $M_k$ par laquelle transite le canal global sélectionné pour relayer des échanges de données entre l'entité source $M_i$ et l'entité destination $M_j$.

6. Dispositif (70) de gestion d'une communication entre au moins une entité source et une entité destination, dans un réseau coopératif comprenant une pluralité d'entité, le dispositif comprenant des moyens (71) de détermination, pour une entité donnée dudit réseau, d'une variation temporelle d'une réponse impulsionnelle d'un canal de transmission établi entre ladite entité donnée et une autre entité,
caractérisé en ce ledit dispositif comprend :

   - des moyens (72) de détermination d'une variation temporelle d'une réponse impulsionnelle d'au moins un canal de transmission global destiné à être établi entre l'entité source et l'entité destination et transitant par au moins une entité relais, à partir des variations temporelles des réponses impulsionnelle desdits canaux de transmission établis respectivement entre l'entité source et l'entité relais, et l'entité relais et l'entité destination constituant le canal de transmission global,;
   - des moyens (73) de sélection d'un canal de transmission global parmi l'ensemble des canaux de transmission globaux déterminés par comparaison de la variation temporelle de la réponse impulsionnelle des canaux de transmission globaux avec une variation temporelle d'une réponse impulsionnelle d'un canal de transmission établi directement entre l'entité source et l'entité destination.

7. Dispositif de gestion d'une communication selon la revendication 6, **caractérisé en ce qu'**il comprend également des moyens (74) d'information de l'entité relais par laquelle transite le canal global sélectionné pour relayer des échanges de données entre l'entité source et l'entité destination.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de communication selon l'une au moins des revendications 1 à 5, lorsqu'il est exécuté sur un ordinateur.

**Patentansprüche**

1. Kommunikationsverfahren zwischen mindestens einer Quellentität und einer Zielentität in einem kooperativen Netz, das eine Vielzahl von Entitäten enthält, wobei das Verfahren einen Schritt der Bestimmung, für eine gegebene Entität des Netzes, einer zeitlichen Veränderung einer Impulsantwort eines Übertragungskanals aufweist, der zwischen der gegebenen Entität und einer anderen Entität aufgebaut ist,
**dadurch gekennzeichnet, dass** das Verfahren enthält:

   - einen Schritt der Bestimmung (201) einer zeitlichen Veränderung einer Impulsantwort mindestens eines globalen Übertragungskanals, der dazu bestimmt ist, zwischen der Quellentität und der Zielentität aufgebaut zu werden und über mindestens eine Relais-Entität geht, ausgehend von den zeitlichen Veränderungen der Impulsantworten der zwischen der Quellentität und der Relais-Entität bzw. der Relais-Entität und der Zielentität aufgebauten Übertragungskanäle, die den globalen Übertragungskanal bilden,
- einen Schritt der Auswahl (202) eines globalen Übertragungskanals aus der Gruppe der globalen Übertragungskanäle, die durch Vergleich der zeitlichen Veränderung der Impulsantwort der globalen Übertragungskanäle mit einer zeitlichen Veränderung einer Impulsantwort eines Übertragungskanals bestimmt werden, der direkt zwischen der Quellentität und der Zielentität aufgebaut wird.

2. Kommunikationsverfahren nach Anspruch 1, **dadurch gekennzeichnet, dass** die zeitliche Veränderung einer Impulsantwort mindestens eines Übertragungskanals ausgehend von einem Mittelwert der Impulsantworten der Übertragungskanäle und von einer Verschiebungsgeschwindigkeit der gegebenen Entität bestimmt wird.

3. Kommunikationsverfahren nach einem der vorhergehenden Ansprüche, **dadurch gekennzeichnet, dass** ein globaler Übertragungskanal ausgewählt wird, wenn die zeitliche Veränderung der Impulsantwort des globalen Übertragungskanals größer als eine vorbestimmte Schwelle ist, und wenn eine zeitliche Veränderung einer Impulsantwort eines direkt zwischen der Quellentität und der Relais-Entität aufgebauten Übertragungskanals geringer als die vorbestimmte Schwelle ist.

4. Kommunikationsverfahren nach einem der Ansprüche 1 bis 3, **dadurch gekennzeichnet, dass** der Auswahlschritt mindestens ein zusätzliches Kriterium berücksichtigt, das zu der Gruppe gehört, die enthält:

   - eine Dämpfung eines Signals in dem Übertragungskanal;
   - eine Verschiebungsgeschwindigkeit der Relais-Entität;
   - eine Entfernung zwischen der Quellentität und der Relais-Entität;
   - eine Entfernung zwischen der Relais-Entität und der Zielentität;
   - eine verfügbare Bandbreite;
   - einen Betriebszustand der Relais-Entität;
   - Interferenzen (zwischen verschiedenen Strecken, zwischen Benutzern, zwischen Zellen).

5. Kommunikationsverfahren nach einem der Ansprüche 1 bis 4, **dadurch gekennzeichnet, dass** es einen Schritt (203) der Benachrichtigung der Relais-Entität $M_k$ aufweist, durch die der ausgewählte globale Kanal geht, um Datenaustauschvorgänge zwischen der Quellentität $M_i$ und der Zielentität $M_j$ weiterzuleiten.

6. Vorrichtung (70) zur Verwaltung einer Kommunikation zwischen mindestens einer Quellentität und einer Zielentität in einem kooperativen Netz, das eine Vielzahl von Entitäten enthält, wobei die Vorrichtung Einrichtungen (71) zur Bestimmung, für eine gegebene Entität des Netzes, einer zeitlichen Veränderung einer Impulsantwort eines zwischen der gegebenen Entität und einer anderen Entität aufgebauten Übertragungskanals enthält,
   **dadurch gekennzeichnet, dass** die Vorrichtung enthält:

   - Einrichtungen (72) zur Bestimmung einer zeitlichen Veränderung einer Impulsantwort mindestens eines globalen Übertragungskanals, der dazu bestimmt ist, zwischen der Quellentität und der Zielentität aufgebaut zu werden, und durch mindestens eine Relais-Entität geht, ausgehend von den zeitlichen Veränderungen der Impulsantworten der zwischen der Quellentität und der Relais-Entität bzw. der Relais-Entität und der Zielentität aufgebauten Übertragungskanäle, die den globalen Übertragungskanal bilden;
   - Einrichtungen (73) zur Auswahl eines globalen Übertragungskanals aus der Gruppe von globalen Übertragungskanälen, die durch Vergleich der zeitlichen Veränderung der Impulsantwort der globalen Übertragungskanäle mit einer zeitlichen Veränderung einer Impulsantwort eines direkt zwischen der Quellentität und der Zielentität aufgebauten Übertragungskanals bestimmt werden.

7. Vorrichtung zur Verwaltung einer Kommunikation nach Anspruch 6, **dadurch gekennzeichnet, dass** sie ebenfalls Einrichtungen (74) zur Benachrichtigung der Relais-Entität enthält, durch die der ausgewählte globale Kanal geht, um Datenaustauschvorgänge zwischen der Quellentität und der Zielentität weiterzuleiten.

8. Computerprogrammprodukt, das von einem Kommunikationsnetz heruntergeladen werden kann und/oder auf einem computerlesbaren Träger gespeichert ist und/oder von einem Mikroprozessor ausgeführt werden kann, **dadurch gekennzeichnet, dass** es Programmcodeanweisungen für die Ausführung des Kommunikationsprogramms nach mindestens einem der Ansprüche 1 bis 5 enthält, wenn es auf einem Computer ausgeführt wird.

**Claims**

1. Method of communication between at least one source entity and one destination entity, in a cooperative network comprising a plurality of entities, the method comprising a step of determining, for a given entity of said network, a temporal variation of an impulse response of a transmission channel established between said given entity and another entity,
**characterized in that** said method comprises:

- a step of determining (201) a temporal variation of an impulse response of at least one global transmission channel intended to be established between the source entity and the destination entity and passing through at least one relay entity, on the basis of the temporal variations of the impulse responses of said transmission channels established respectively between the source entity and the relay entity, and the relay entity and the destination entity constituting the global transmission channel,
- a step of selecting (202) a global transmission channel from among the set of global transmission channels determined by comparing the temporal variation of the impulse response of the global transmission channels with a temporal variation of an impulse response of a transmission channel established directly between the source entity and the destination entity.

2. Communication method according to Claim 1, **characterized in that** the temporal variation of an impulse response of at least one transmission channel is determined on the basis of a mean value of the impulse responses of said transmission channels and of a speed of travel of said given entity.

3. Communication method according to either of the preceding claims, **characterized in that** a global transmission channel is selected when the temporal variation of the impulse response of said global transmission channel is above a predetermined threshold and when a temporal variation of an impulse response of a transmission channel established directly between the source entity and the relay entity is below said predetermined threshold.

4. Communication method according to any one of Claims 1 to 3, **characterized in that** said selection step takes account of at least one additional criterion belonging to the group comprising:

- an attenuation of a signal in said transmission channel;
- a speed of travel of said relay entity;
- a distance between said source entity and said relay entity;
- a distance between said relay entity and said destination entity;
- a quantity of passband available;
- an operating state of said relay entity;
- interference (between various paths, between users, between cells).

5. Communication method according to any one of Claims 1 to 4, **characterized in that** it comprises a step (203) of informing the relay entity $M_k$ through which the selected global channel passes to relay exchanges of data between the source entity $M_i$ and the destination entity $M_j$.

6. Device (70) for managing a communication between at least one source entity and one destination entity, in a cooperative network comprising a plurality of entities, the device comprising means (71) for determining, for a given entity of said network, a temporal variation of an impulse response of a transmission channel established between said given entity and another entity,
**characterized in that** said device comprises:

- means (72) for determining a temporal variation of an impulse response of at least one global transmission channel intended to be established between the source entity and the destination entity and passing through at least one relay entity, on the basis of the temporal variations of the impulse responses of said transmission channels established respectively between the source entity and the relay entity, and the relay entity and the destination entity constituting the global transmission channel;
- means (73) for selecting a global transmission channel from among the set of global transmission channels determined by comparing the temporal variation of the impulse response of the global transmission channels with a temporal variation of an impulse response of a transmission channel established directly between the source entity and the destination entity.

7. Device for managing a communication according to Claim 6, **characterized in that** it also comprises means (74) for informing the relay entity through which the selected global channel passes to relay exchanges of data between the source entity and the destination entity.

8. Computer program product downloadable from a communication network and/or stored on a medium readable by computer and/or executable by a microprocessor, **characterized in that** it comprises program code instructions for the execution of the communication method according to at least one of Claims 1 to 5, when it is executed on a computer.

Figure 1

Figure 2

M2-SB

M3-SB

M1-M4-SB

M1-SB

Figure 3

| M1 | M2 | M2 | M2 | M3 | M3 | M3 | M2 | M2 | M2 | M3 | M3 | M3 | M3 | M1 | M2 |
|----|----|----|----|----|----|----|----|----|----|----|----|----|----|----|----|

Figure 4

| M2 | M3 | M3 | M3 | M1/M4 | M2 | M1/M4 | M3 | M3 | M3 | M3 | M1/M4 | M1/M4 | M2 |
|----|----|----|----|-------|----|-------|----|----|----|----|-------|-------|----|

Figure 5

Figure 6

70

71

73

72

74

FIGURE 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007189260 A1

**Littérature non-brevet citée dans la description**

- **C.S. PATEL et al.** Statistic properties of amplify and forward relay fading channels. *IEEE Transactions on Vehicular technology,* Janvier 2006, vol. 55 (1

- **W. C. JAKES.** Microwave Mobile Communications. IEEE Press, 1974